Europäisches Patentamt

(19) European Patent Office

Office européen des brevets

(11) Numéro de publication : **0 064 114 B1**

(12) **FASCICULE DE BREVET EUROPÉEN**

(45) Date de publication du fascicule du brevet :
28.11.84

(51) Int. Cl.³ : **A 01 D 43/10**

(21) Numéro de dépôt : 81400716.7

(22) Date de dépôt : 06.05.81

(54) Faucheuse conditionneuse.

(43) Date de publication de la demande :
10.11.82 Bulletin 82/45

(45) Mention de la délivrance du brevet :
28.11.84 Bulletin 84/48

(84) Etats contractants désignés :
AT CH DE FR GB LI NL SE

(56) Documents cités :
FR-A- 2 424 693
GB-A- 1 010 176
GB-A- 2 007 955
Imprimé publicitoire de KUHN: "Descriptif et argumentaire faucheuse-conditionneuse FC44" mis à la disposition du public lors de l'exposition S. I.M.A. Paris 4-11 Mars 1979

(73) Titulaire : **JOHN DEERE (Société Anonyme)**
8, Quai de la Madeleine
F-45000 Orléans (FR)

(72) Inventeur : **Berthet, Jean-Paul**
11, Faubourg Roch
F-70100 Arc-les-Gray (FR)

(74) Mandataire : **Pruvost, Marc Henri et al**
Cabinet ORES 6, Avenue de Messine
F-75008 Paris (FR)

## Description

La présente invention concerne les faucheuses conditionneuses du type utilisé pour couper et conditionner des produits de récolte, tels que de l'herbe ou du fourrage.

Les faucheuses-conditionneuses connues comprennent généralement un châssis destiné à être attelé à un véhicule tracteur et sur lequel est montée une barre de coupe qui peut être du type à lame, mais qui est souvent dans les faucheuses-conditionneuses modernes d'un type comportant un certain nombre de disques ou toupies tournant par paires en sens opposés pour couper les produits de récolte sur pied. Dans un type de machines connu, cette barre de coupe est surmontée vers sa partie arrière d'un rotor de conditionnement constitué par des dents, des doigts ou des éléments analogues montés sur un arbre orienté transversalement à la direction d'avancement de la machine, ce rotor étant combiné à un capot de conditionnement qui a pour effet de guider les produits de récolte coupés pendant leur conditionnement, de provoquer leur passage vers l'arrière au-dessus du rotor et d'assurer, sous l'effet du rotor, leur projection vers l'arrière de la faucheuse-conditionneuse, pour former un andain.

On sait que, pour obtenir un conditionnement approprié des produits, il est nécessaire de pouvoir régler la position du capot de conditionnement par rapport aux extrémités des dents ou doigts du rotor en fonction de la condition, notamment du degré d'humidité des produits de récolte, et de leur nature. On a proposé à cet effet, dans la technique antérieure, diverses solutions pour le réglage de ce capot. Un capot réglable de ce type est décrit par exemple dans la demande de brevet français FR-A-2 408 992.

Le but de l'invention est de créer une faucheuse-conditionneuse équipée d'un capot de conditionnement agencé de façon à permettre, avec des moyens particulièrement simples, un réglage rapide de ce capot par rapport au rotor.

L'invention est matérialisée dans une faucheuse-conditionneuse du type comportant une barre de coupe au-dessus et vers la partie arrière de laquelle est disposé un rotor muni de dents ou doigts, tournant autour d'un axe horizontal transversal à la direction d'avancement de la machine et combiné à un capot de conditionnement maintenu uniquement sur ses bords transversaux avant et arrière, entourant une partie de la circonférence du rotor pour guider les produits de récolte repris par celui-ci après qu'ils ont quitté la barre de coupe, pour les obliger à passer au-dessus du rotor en vue de leur projection sur le sol en andain à l'arrière de la machine, ce capot étant réglable par ses points de maintien de telle façon que l'un ou les deux bords transversaux puissent être déplacés par rapport à la périphérie du rotor, caractérisée en ce que ce capot de conditionnement, qui est en tôle élastiquement déformable, est maintenu sur au moins un de ses bords transversaux par un dispositif de réglage rapide constitué par un excentrique articulé sur au moins une partie fixe de la machine, relié positivement audit bord transversal du capot et dont la position angulaire est réglable, afin de modifier, par déformation élastique de la tôle, le profil du capot de conditionnement et ainsi sa position par rapport au rotor.

Les essais effectués ont montré qu'il était suffisant de prévoir un excentrique de réglage de ce type pour l'un des bords transversaux du capot de conditionnement, de sorte que celui-ci peut être fixé sur le châssis ou corps de la machine vers son autre bord. Le dispositif de réglage rapide est alors prévu de préférence pour le bord supérieur arrière du capot de conditionnement, entourant une partie avant de la circonférence du rotor. Mais il serait bien entendu possible également de prévoir un tel dispositif de réglage pour les deux bords transversaux avant et arrière du capot.

Suivant un mode de réalisation paraissant avantageux, afin d'obtenir une position de réglage uniforme sur toute la largeur du capot de conditionnement, l'excentrique est constitué par un maneton de grande longueur engagé dans un repli ou profilage équivalent du bord correspondant du capot de conditionnement et relié par des bras de manivelle à des tourillons d'extrémité articulés sur des parties fixes de la machine et pouvant être déplacés par pivotement pour régler la position angulaire de l'excentrique et ainsi pour modifier le profil de la tôle formant le capot de conditionnement et en conséquence sa position par rapport aux extrémités des dents ou doigts du rotor. Le repli de tôle prévu pour la réception du maneton de l'excentrique peut être continu et peut s'étendre au moins sur la majeure partie de la largeur du capot, ou bien le maneton peut être engagé dans des logements de réception individuels du bord concerné répartis sur cette largeur du capot et formés par exemple par des pattes recourbées ou roulées à partir de la tôle.

Suivant une autre particularité paraissant avantageuse, afin de faciliter la commande du réglage, un levier est rendu angulairement solidaire de l'un des tourillons de l'excentrique et ce levier est conjugué à un verrou ou analogue pouvant être engagé dans l'une de plusieurs positions d'encrantement prévues dans un organe de blocage fixé sur la machine, par exemple dans un secteur de réglage.

Suivant une réalisation possible, on peut prévoir un secteur de réglage fixé sur la machine, muni d'encoches dans lesquelles peut être engagé un verrou sollicité élastiquement vers sa position de travail ou d'encrantement, mais pouvant en être écarté de façon positive pour le réglage du capot.

On voit ainsi qu'il suffit, avec un dispositif du type prévu suivant l'invention, de déplacer le levier de réglage et de l'amener dans la position d'encrantement désirée par rapport au secteur de réglage ou de blocage pour, en profitant de l'élasticité de la tôle formant le capot de conditionnement, modifier le profil de ce capot et notamment son écartement par rapport aux extrémités des dents ou doigts du rotor, en l'adaptant ainsi aux conditions de travail chaque fois rencontrées pour l'obtention d'un travail optimum. On conçoit que cette opération peut être réalisée très rapidement par le conducteur du véhicule auquel la faucheuse-conditionneuse est attelée, sans que cette opération exige l'emploi d'un outil ou une connaissance quelconque de la part de l'opérateur.

La description qui va suivre, faite en regard des dessins annexés, donnés à titre non limitatif, permettra de mieux comprendre l'invention.

La Figure 1 est une vue schématique de profil d'une faucheuse-conditionneuse à laquelle l'invention est appliquée.

La Figure 2 est une vue en perspective éclatée du capot de conditionnement et de son dispositif de réglage.

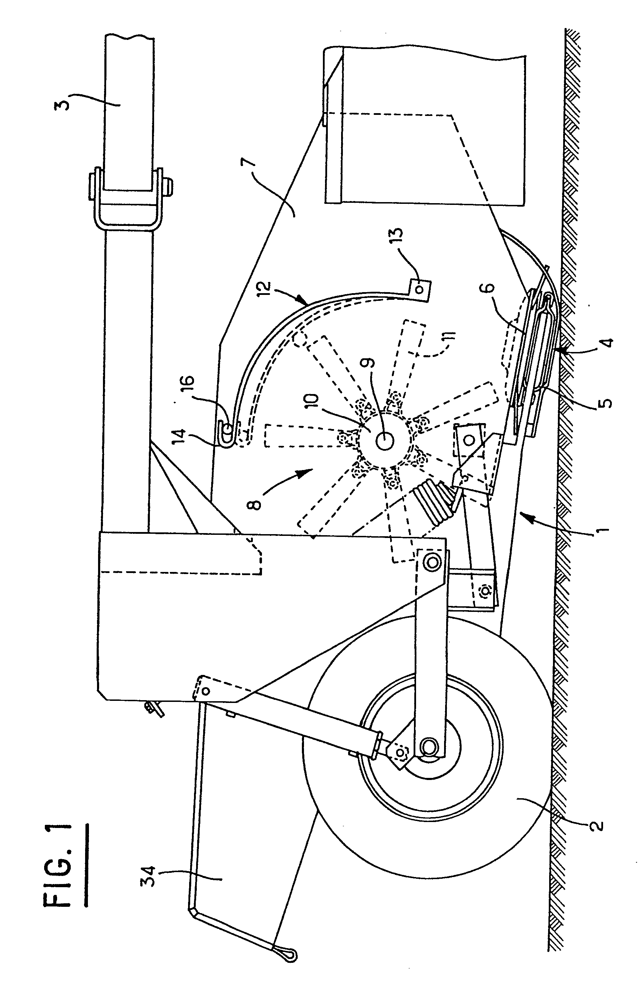

On a représenté schématiquement sur la Fig. 1 une faucheuse-conditionneuse comprenant un châssis 1 qui est supporté à partir du sol par des roues arrière 2, ce châssis étant relié par un timon ou une flèche d'attelage dont une partie est visible en 3 à un véhicule tracteur qui peut être un tracteur agricole.

Le châssis 1 porte une barre de coupe désignée d'une façon générale par la référence 4, qui comprend dans le cas présent une poutre 5 sur laquelle sont montés des disques de coupe rotatifs 6 tournant par paires en sens opposés d'une manière en soi connue, pour couper ou faucher les produits de récolte sur le champ lors de la progression de la machine.

Le châssis 1 porte également deux parois latérales 7 entre lesquelles est monté un rotor désigné d'une façon générale par la référence 8, comprenant de manière connue un arbre transversal horizontal 9 qui porte par l'intermédiaire de flasques ou moyeux 10 des dents ou doigts 11 reliés à ces flasques à articulation, également d'une manière en soi connue.

Un capot de conditionnement indiqué en 12 est prévu sur la machine entre les parois latérales 7. Ce capot de conditionnement entoure comme montré sur la Fig. 1 la partie avant et la partie supérieure du rotor de conditionnement. Un déflecteur arrière 34 est également porté par le châssis 1 de la machine.

Le fonctionnement d'ensemble d'une faucheuse-conditionneuse de ce type est bien connu. Les produits coupés par les disques 6 de la barre de coupe 4 se déplacent vers l'arrière au-dessus de ces disques 6 et sont alors repris par les dents ou doigts 11 du rotor 8, qui est entraîné à vitesse élevée par des moyens convenables (non représentés) dans le sens anti-horaire quand on regarde la Fig. 1. Le capot 12 a pour but d'assurer, en combinaison avec les dents ou doigts du rotor 8, le conditionnement des produits de récolte et de guider ces produits pour les faire passer au-dessus de ce rotor, lesdits produits étant alors projetés en direction de l'arrière et étant rabattus sur le sol en andain par le déflecteur arrière 34.

Comme indiqué précédemment, on sait que pour obtenir un conditionnement approprié des produits de récolte, il est nécessaire de pouvoir adapter la position du capot de conditionnement par rapport au rotor, et plus spécialement la distance qui sépare ce capot des extrémités libres des doigts du rotor de conditionnement, aux conditions de travail chaque fois rencontrées et notamment au degré d'humidité et à la nature des produits de récolte fauchés et conditionnés.

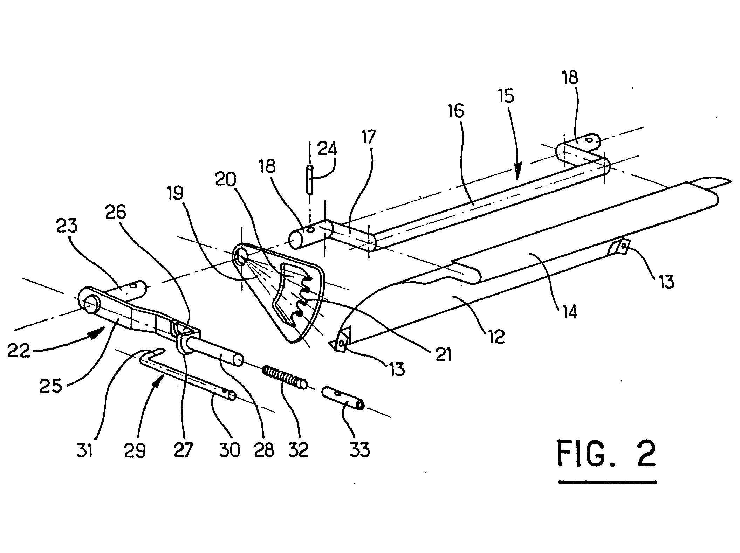

Suivant le mode de réalisation considéré, le capot de conditionnement 12 est muni vers son bord inférieur avant de deux pattes 13 qui sont fixées sur les parois latérales 7 du corps de la machine. Ce capot présente ici vers son bord supérieur un repli de tôle 14 qui est bien visible également sur la Fig. 2 et qui s'étend sur la plus grande partie de la largeur dudit capot.

Suivant l'invention, il est prévu un excentrique double 15 comprenant un maneton de grande longueur 16 relié par des bras d'extrémité 17 à deux tourillons ou bouts d'arbres 18 qui sont montés à rotation dans les parois latérales 7 du corps de la faucheuse-conditionneuse. Comme cela ressort de la Fig. 1, le maneton 16 de l'excentrique est engagé dans le repli de tôle 14 du capot 12.

Une paroi latérale 7 porte un secteur de réglage 19 fixé sur elle et muni d'une partie formant moyeu traversée par l'un des tourillons 18. Ce secteur 19, qui est immobile, présente une découpe ou lumière 20 munie d'encoches 21 réparties sur un arc de cercle. Un levier de réglage désigné d'une façon générale par la référence 22 comprend un bout d'arbre 23 qui est engagé dans le maneton 18, dont il est rendu solidaire par exemple au moyen d'une goupille 24, et un bras 25 qui présente un décrochement 26, ce bras se terminant par une patte 27 coudée à angle droit, portant elle-même un tube 28 disposé dans le prolongement du bras 25. Un verrou 29 est constitué par une tige coudée à 90° ou en L. La branche la plus longue 30 de ce verrou est logée à l'intérieur du tube 28, tandis que sa branche plus courte 31 fait saillie par le décrochement 26 prévu dans le levier 22, en s'étendant à travers la découpe 20 du secteur de réglage 19. Un ressort 32 engagé également dans le tube 28 autour de la branche 30 du verrou 29 prend appui sur le fond de ce tube. Un bouton-poussoir 33 vient coiffer ce ressort, ainsi que l'extrémité de la branche 30 du verrou 29, sur laquelle il est fixé longitudinalement par exemple par goupillage.

Le mode d'utilisation du dispositif ainsi décrit se comprend aisément à la lecture de ce qui précède. Dans la condition de repos, le ressort 32 agit sur le verrou 29 pour engager sa branche 31 dans l'une des encoches 21 de la découpe 20 prévue dans le secteur 19. Etant donné que ce secteur 19 est fixé sur l'une des parois latérales 7 du corps 1 de la faucheuse-conditionneuse, l'excentrique 15 est ainsi immobilisé et la position du capot de conditionnement 12 est fixée.

Si le réglage entre le capot de conditionnement 12 et le rotor 8 doit être modifié, par exemple pour tenir compte d'une modification du degré d'humidité des produits de récolte en vue d'une adaptation du conditionnement réalisé par la machine, il suffit à l'opérateur d'appuyer sur le bouton-poussoir 33 ce qui, par l'intermédiaire de la branche 30 du verrou 29, dégage l'autre branche 31 de ce verrou de l'encoche 21 dans laquelle elle est engagée. L'opérateur peut alors déplacer le levier 22 en le faisant pivoter autour du bout d'arbre 23, ce qui provoque un déplacement angulaire de l'excentrique 15 et, par l'intermédiaire du maneton 16 engagé dans le repli 14 du capot de conditionnement 12, une déformation élastique de la tôle formant ce capot pour assurer le déplacement de celui-ci, le bord inférieur du capot, fixé en 13 sur les parois latérales 7, demeurant immobile. Quand la position désirée est atteinte, l'opérateur relâche le bouton-poussoir 33, ce qui réengage le verrou 29 dans une autre encoche 21 pour immobiliser le capot de conditionnement 12 dans sa nouvelle position.

On comprend qu'il est ainsi possible de régler de manière rapide et simple le capot de conditionnement de la faucheuse-conditionneuse pour l'adapter aux conditions de travail chaque fois rencontrées. Le dispositif utilisé, qui tire parti de l'élasticité ou de la flexibilité de la tôle formant le capot de conditionnement, est particulièrement simple et robuste, ce qui représente un avantage évident compte tenu des dures conditions de travail auxquelles les machines de ce type sont soumises en service.

**Revendications**

1. Faucheuse-conditionneuse du type comportant une barre de coupe (4) au-dessus et vers la partie arrière de laquelle est disposé un rotor (8) muni de dents ou doigts (11), tournant autour d'un axe horizontal transversal à la direction d'avancement de la machine et combiné à un capot de conditionnement (12) maintenu uniquement sur ses bords transversaux avant et arrière, entourant une partie de la circonférence du rotor (8) pour guider les produits de récolte repris par celui-ci après qu'ils ont quitté la barre de coupe, pour les obliger à passer au-dessus du rotor en vue de leur projection sur le sol en andain à l'arrière de la machine, ce capot (12) étant réglable par ses points de maintien de telle façon que l'un ou les deux bords transversaux puissent être déplacés par rapport à la périphérie du rotor, caractérisée en ce que ce capot de conditionnement (12), qui est en tôle élastiquement déformable, est maintenu sur au moins un de ses bords transversaux par un dispositif de réglage rapide constitué par un excentrique (15) articulé sur au moins une partie fixe de la machine, relié positivement audit bord transversal du capot et dont la position angulaire est réglable, afin de modifier, par déformation élastique de la tôle, le profil du capot de conditionnement et ainsi sa position par rapport au rotor (8).

2. Faucheuse-conditionneuse suivant la revendication 1, caractérisée en ce que ce dispositif de réglage rapide formé par un excentrique (15) est combiné au bord supérieur arrière (14) du capot de conditionnement (12) entourant une partie avant de la circonférence du rotor.

3. Faucheuse-conditionneuse suivant la revendication 1, caractérisée en ce qu'un dispositif de réglage rapide constitué par un excentrique (15) est prévu pour les deux bords transversaux avant et arrière du capot (12).

4. Faucheuse-conditionneuse suivant l'une quelconque des revendications précédentes, caractérisée en ce que pour obtenir une position de réglage uniforme sur toute la largeur du capot de conditionnement (12), l'excentrique (15) est constitué par un maneton (16) de grande longueur engagé dans un repli (14) ou profilage équivalent du bord correspondant du capot de conditionnement (12) et relié par des bras de manivelle (17) à des tourillons d'extrémités (18) articulés sur des parties fixes de la machine et pouvant être déplacés par pivotement pour régler la position angulaire de l'excentrique (15).

5. Faucheuse-conditionneuse suivant la revendication 4, caractérisée en ce que le repli de tôle (14) prévu pour la réception du maneton (16) de l'excentrique (15) est continu et s'étend au moins sur la majeure partie de la largeur du capot (12).

6. Faucheuse-conditionneuse suivant la revendication 4, caractérisée en ce que le maneton (16) de l'excentrique (15) est engagé dans des logements de réception individuels du bord concerné répartis sur la largeur du capot (12), formés notamment par des pattes recourbées ou roulées à partir de la tôle.

7. Faucheuse-conditionneuse suivant l'une quelconque des revendications 4 à 6, caractérisée en ce qu'un levier (22) est rendu angulairement solidaire de l'un des tourillons (18) de l'excentrique (15), ce levier étant conjugué à un verrou (20) ou analogue pouvant être engagé dans l'une de plusieurs positions d'encrantement prévues dans un organe de réglage ou de blocage fixé sur la machine, par exemple dans un secteur de réglage (19).

8. Faucheuse-conditionneuse suivant la revendication 7, caractérisée en ce que le secteur de réglage (19) est muni d'encoches (21) dans lesquelles un verrou (29) sollicité élastiquement vers sa position de travail peut être engagé, des moyens (33) étant prévus pour écarter ce verrou (29) de sa position de blocage en vue du réglage du capot de conditionnement.

**Claims**

1. A reaping-conditioning machine of the type comprising a cutting bar (4) above and towards the rearward part of which is disposed a rotor (8) provided with teeth or fingers (11), rotating about a horizontal axis which is transverse with respect to the direction of forward movement of the machine, and combined with a conditioning hood (12) which is held only at its front and rear transverse edges, the hood surrounding a portion of the circumference of the rotor (8) to guide the crop products which are picked up by the rotor after they have left the cutting bar, to cause them to pass above the rotor for them to be projected on to the ground in the form of a windrow to the rear of the machine, the hood (12) being adjustable by way of its mounting points in such a way that one or both transverse edges can be displaced with respect to the periphery of the rotor, characterised in that the hood (12) which is of resiliently deformable sheet metal is held at at least one of its transverse edges by a rapid adjusting means comprising an eccentric (15) which is pivotally mounted on at least a fixed portion of the machine and which is positively connected to said transverse edge of the hood and the angular position of which is adjustable in order to modify the profile of the conditioning hood by resilient deformation of the sheet metal, and thus the position of the hood with respect to the rotor (8).

2. A machine according to claim 1, characterised in that said rapid adjusting means which is formed by an eccentric (15) is combined with the upper rear edge (14) of the conditioning hood (12) which surrounds a forward portion of the circomference of the rotor.

3. A machine according to claim 1, characterised in that a rapid adjusting means formed by an eccentric (15) is provided for the two front and rear transverse edges of the hood (12).

4. A machine according to any one of the preceding claims, characterised in that, to produce a uniform adjusted position over the entire width of the conditioning hood (12), the eccentric (15) comprises a crank bar member (16) of substantial length, which is engaged in a fold portion (14) or equivalent configuration at the corresponding edge of the conditioning hood (12) and which is connected by crank arms (17) to end journals (18) which are pivotally mounted on fixed portions of the machine and which can be displaced by pivotal movement to adjust the angular position of the eccentric (15).

5. A machine according to claim 4, characterised in that the sheet metal fold portion (14) provided for receiving the crank bar member (16) of the eccentric (15) is continuous and extends at least over the major part of the width of the hood (12).

6. A machine according to claim 4, characterised in that the crank bar member (16) of the eccentric (15) is engaged in individual receiving housings at the edge in question, being distributed over the width of the hood (12) and formed in particular by lugs that are bent or rolled from the sheet metal.

7. A machine according to any one of claims 4 to 6, characterised in that a lever (22) is angularly fixed to one of the journals (18) of the eccentric (15), said lever being combined with a bolt (20) or the like which can be engaged in one of a plurality of notching engagement positions provided in an adjusting or locking member which is fixed on the machine, for example in a sector-shaped adjusting member (19).

8. A machine according to claim 7, characterised in that the sector-shaped adjusting member (9) is provided with notches (21) into which can be engaged a bolt (29) which is urged resiliently towards its operating position, means (33) being provided to move said bolt (29) away from its locking position for adjustment of the conditioning hood.

**Ansprüche**

1. Konditionierender Grasmäher des Typs, welcher einen Messerbalken (4) aufweist, über dem und zu dessen rückwärtigen Bereich hin ein Rotor (8) angeordnet ist, dei mit Zähnen oder Fingern (11) ausgerüstet ist, um eine horizontale und quer zur Fahrtrichtung der Maschine angeordnete Achse dreht und mit einer konditionierenden Abdeckhaube (12) kombiniert ist, die nur an den vorderen und hinteren Querkanten gehalten ist und einen Teil des Umfanges des Rotors (8) umschliesst, um die Ernteprodukte, die von ihr aufgefangen werden, nachdem sie den Messerbalken verlassen haben, zu führen und dazu zu bringen, dass sie im Hinblick auf ihre Wurfbahn über den Rotor auf den Boden in Form eines Schwads hinter der Maschine gelangen, wobei die Haube (12) durch ihre Haltepunkte in der Weise regelbar ist, dass ein oder beide Querkanten in bezug auf den Umfang verstellt werden können, dadurch gekennzeichnet, dass die Konditionierungshaube (12), die aus einem elastisch verformbaren Blech besteht, auf wenigstens einer ihrer Querkanten durch eine rasch wirksame Regelvorrichtung gehalten ist, die durch einen Exzenter (15) gebildet ist, der auf wenigstens einem festen Teil der Maschine schwenkbar und positiv mit der genannten Querkante der Haube verbunden ist und dessen Winkelstellung einstellbar ist, um durch elastische Verformung des Bleches das Profil der Konditionierungshaube und so ihre Stellung in bezug auf den Rotor (8) zu modifizieren.

2. Konditionierender Grasmäher nach Anspruch 1, dadurch gekennzeichnet, dass die durch einen Exzenter (15) gebildete, rasch wirksame Regelvorrichtung mit der oberen rückwärtigen Kante (14) der Konditionierungshaube (12) kombiniert ist, welche einen vorderen Teil des Umfanges des Rotors umschliesst.

3. Konditionierender Grasmäher nach Anspruch 1, dadurch gekennzeichnet, dass die durch einen Exzenter (15) gebildete, rasch wirkende Regelvorrichtung für die beiden Querkanten, vorne und hinten, der Haube (12) vorgesehen ist.

4. Konditionierender Grasmäher nach irgendeinem der voranstehenden Ansprüche, dadurch gekennzeichnet, dass zum Erreichen einer gleichförmigen Regelstellung auf der ganzen Breite der Konditionierungshaube (12) der Exzenter (15) durch einen Kurbelzapfen (16) grosser Länge gebildet ist, der an einem Falz (14) oder einem äquivalenten Profil der korrespondierenden Kante der Konditionierungshaube (12) angreift und über Kurbelarme (17) mit äusseren Lagerzapfen (18) verbunden ist, die auf festen Teilen der Maschine gelagert sind, und durch Schwenken verstellt werden kann, um die Winkelstellung des Exzenters (15) zu regeln.

5. Konditionierender Grasmäher nach Anspruch 4, dadurch gekennzeichnet, dass der Falz des Bleches (14), der zur Aufnahme des Kurbelzapfens (16) des Exzenters (15) vorgesehen ist, fortgesetzt ist und sich wenigstens über den grösseren Teil der Breite der Haube (12) erstreckt.

6. Konditionierender Grasmäher nach Anspruch 4, dadurch gekennzeichnet, dass der Kurbelzapfen (16) des Exzenters (15) in individuellen Aufnahmetaschen der betreffenden Kante eingreift, welche über die Breite der Haube (12) verteilt sind, und insbesondere durch aus dem Blech gekrümmte oder gerollte Taschen gebildet sind.

7. Konditionierender Grasmäher nach irgendeinem der Ansprüche 4 bis 6, dadurch gekennzeichnet, dass ein Hebel (22) winkelförmig fest mit einem der Drehzapfen (18) des Exzenters (15) verbunden ist, wobei dieser Hebel mit einem Bolzen (20) oder dergleichen verbunden ist, welcher mit einer von mehreren Stellungsausnehmungen in Eingriff gebracht werden kann, welche in einem Regel- oder Sperrorgan vorgesehen sind, das auf der Maschine befestigt ist, beispielsweise in einen Regelsektor (19).

8. Konditionierender Grasmäher nach Anspruch 7, dadurch gekennzeichnet, dass der Regelsektor (19) mit Taschen (21) versehen ist, in welche ein Bolzen (29) eingreifen kann, der elastisch in seine Arbeitsstellung vorgespannt ist, und dass Mittel (33) vorgesehen sind, um den Bolzen (29) aus seiner Sperrstellung im Hinblick auf eine Einstellung der Konditionierungshaube herauszubringen.

FIG. 1

0 064 114

FIG. 2

0 064 114